# FASCICULE DE BREVET EUROPEEN

(11) **EP 4 454 771 B1**
(45) Date de publication et mention de la délivrance du brevet: **04.06.2025**
(21) Numéro de dépôt: 23170389.3
(22) Date de dépôt: 27.04.2023
(51) Int. Cl.: B09B 3/35

(54) **MÉTHODE ET INSTALLATION DE SÉPARATION CENTRIFUGE INDUSTRIELLE DES DÉCHETS ALIMENTAIRES EMBALLÉS**
VERFAHREN UND ANLAGE ZUR INDUSTRIELLEN ZENTRIFUGALEN TRENNUNG VON VERPACKTEN LEBENSMITTELABFÄLLEN
METHOD AND INSTALLATION FOR INDUSTRIAL CENTRIFUGAL SEPARATION OF PACKAGED FOOD WASTE

(43) Date de publication de la demande: 30.10.2024
(73) Titulaire: Vanheede Biomass Solutions SA, 7040 Quévy (BE)
(72) Inventeur: HAUMONT, Benoit, 7040 Quévy (BE); WECXSTEEN, Olivier, 7040 Quévy (BE); DEBLANDRE, Jean-Noël, 7040 Quévy (BE); GANGI, Roberto, 7040 Quévy (BE); GRIMMELPREZ, Dieter, 7040 Quévy (BE); POZZA, Julien, 7040 Quévy (BE)
(74) Mandataire: Hostens, Veerle

(56) Documents cités:
- US-A1- 2020 316 661

## Description

La présente invention concerne une méthode et une installation de séparation centrifuge industrielle des déchets alimentaires emballés, à l'aide d'un séparateur par la force centrifuge dans un premier flux principalement constitué de biomasse et un second flux principalement constitué de matériaux d'emballage en plastique.

De tels déchets alimentaires emballés, séparés d'une manière industrielle, sont des produits qui pour diverses raisons sont devenus impropres à la consommation humaine ou animale. La plupart des flux de déchets proviennent de l'industrie alimentaire, des grandes surfaces, magasins, abattoirs, des entrepôts, des grossistes, des cuisines de collectivité ou des criées.

Dans les grands magasins, par exemple, beaucoup de produits alimentaires emballés qui ne sont pas vendus, par exemple parce que les dates de péremption sont dépassées, finissent comme déchets alimentaires emballés à recycler dans des entreprises de recyclage.

Ces déchets alimentaires emballés sont livrés aux entreprises de recyclage de manière très hétérogène, c'est-à-dire avec leur emballage primaire, avec leur emballage secondaire et /ou en vrac. Pour les emballages primaires et secondaires, on suit la définition de FostPlus, le service public belge pour le recyclage des emballages ménagers, et la directive Emballages de la CE 94/62/CE.

Les emballages primaires peuvent comprendre des sacs en plastique, des sacs en carton, des conserves, etc.

Les emballages secondaires peuvent comprendre des boîtes de plastique rigide dans des cartons, des emballages souples dans un emballage rigide, lui-même dans des boîtes en carton, des palettes filmées, des fûts en plastique, des filet synthétiques, etc. Au niveau de leur contenu, ces déchets peuvent être livrés comme dégraisseur, comme crème glacé, liquide, etc.

Ces déchets alimentaires contiennent très souvent des matières très difficiles à séparer.

Ces déchets alimentaires sont typiquement déballés et séparés de manière industrielle par la force centrifuge dans un flux principalement constitué de biomasse (déchets biologiques organiques) et un flux principalement constitué de matériaux d'emballage en plastique dans les entreprises de recyclage.

US 2020/0316661 A1 décrit des méthodes de séparation utilisant des courants d'air contrôlés dans le but de la séparation densimétrique des matériaux.

US 2006/286230 A1 décrit une méthode de séparation centrifuge industrielle des déchets alimentaires emballés selon le préambule de la revendication 1 et une installation .

Avec les solutions existantes, la qualité du flux peut encore être grandement améliorée. Les impuretés sont de plus en plus considérées comme un problème pour l'environnement. En effet, après traitement complémentaire dans un processus de méthanisation, ce flux de biomasse est principalement utilisé en agriculture pour être épandu sur les champs comme amendement de sol. Des contaminations avec des plastiques ou d'autre matières non dégradable doivent être évitées.

Selon sa composition, le matériau d'emballage, principalement en plastique, est recyclé (mécaniquement ou chimiquement) ou transformé en carburant. A cette fin, ce flux doit contenir le moins de matière organique possible.

L'objectif de l'invention consiste donc à optimiser les solutions existantes pour la séparation des déchets alimentaires emballés d'une manière industrielle afin de maximiser la séparation des deux flux :
- Extraire un maximum de matière organique des flux d'origine industrielle afin de permettre, à ce jour, la meilleure valorisation existante et cela via le processus de méthanisation. Un produit de haute qualité est primordiale pour les exploitants de méthanisation. Une stabilité du produit également car cela leur permet de pouvoir faire un dosage précis pour une production optimale. La stabilité évite de grands problèmes biologiques et un réglage très précis pour viser les meilleures performances. La pureté de la matière organique dénuée de tout plastique donne également une assurance sur le digestat qui sortira de la méthanisation qui permettra un amendement au sol et évitera l'usage d'engrais chimiques.
- Obtenir une fraction emballage la plus propre possible. Pour arriver à un niveau de recyclage élevé, la stabilité des caractéristiques, le calibre de l'emballage et le faible pourcentage d'organique et d'humidité sont cruciaux.

Selon l'invention, cet objectif est atteint via une méthode de séparation centrifuge industrielle des déchets alimentaires emballés, à l'aide d'un séparateur par la force centrifuge dans un premier flux principalement constitué de biomasse et un second flux principalement constitué de matériaux d'emballage en plastique. L'humidité des déchets du premier flux est détectée et régulée en fonction de l'humidité du premier flux détectée, afin d'obtenir un premier flux comprenant entre 20% et 30% de matière sèche et même idéalement entre 22% et 26% de matière sèche.

Avec l'état de l'art, les plastiques collaient rapidement à la grille du séparateur, de sorte que les organiques ne pouvaient plus passer. En régulant continuellement la viscosité en fonction de l'humidité mesurée, les plastiques n'ont plus l'occasion de le faire. Ils traversent maintenant le séparateur dans le second flux.

L'humidité des déchets est de préférence régulée automatiquement en fonction du couple du séparateur (de son taux de charge).

Dans un mode de réalisation préféré de l'invention, le séparateur est en rotation à plus de 1300 tr/min.

Le séparateur comprend de préférence une grille avec des trous ayant une dimension maximale comprise entre 2 et 10 mm, et de préférence entre 3 et 8 mm.

Dans un mode de réalisation spécifique selon l'invention, la matière sèche du deuxième flux est mesurée et l'humidité des déchets est régulée en fonction de la matière sèche du deuxième flux mesurée.

Une méthode selon l'invention de préférence comprend également une préparation des déchets avant leur entrée dans le séparateur et avant le réglage de l'humidité des déchets, pour assurer une bonne homogénéité des déchets. Cette préparation peut consécutivement comprendre les étapes suivantes:
a. un premier mélange des déchets ;
b. un broyage des déchets ;
c. un déferraillage des déchets ;
d. un second mélange des déchets.

Dans ledit broyage, les déchets sont de préférence réduits en morceaux de 150 mm maximum. De très bons résultats sont obtenus lorsque le broyage est réalisé avec un rotor comprenant des couteaux linéaires. Alternativement il est par exemple, possible d'utiliser des couteaux non linéaires mais avec des grilles plus petites, afin d'obtenir des morceaux d'environ 100 mm maximum.

La distance entre les couteaux de la machine et la grille est de préférence régulier et inférieur à 20 mm.

Entre les étapes c et d, les déchets sont de préférence humidifiés dans une étape e. Dans cet étape e, les déchets peuvent plus spécifiquement être transportés à l'aide des vis de transport dont le couple est contrôlé.

L'inclinaison des vis est préférentiellement choisie en fonction de la matière sèche envisagée. De préférence, les vis ont une inclinaison de plus de 20° afin d'obtenir une séparation naturelle de l'excédent de liquide.

En outre dans l'étape e, l'humidité des déchets est de préférence régulée afin d'obtenir des déchets comprenant entre 35 % et 45 % de matière sèche.

Ceci peut être réalisé en recueillant et, si nécessaire, en rajoutant du liquide.

Avec un mode de réalisation de la méthode décrite ci-dessus, un premier flux organique de très haute qualité et de très haute propreté peut être obtenu.

Le deuxième flux est encore fortement chargé en organique et difficilement valorisable en recyclage ou comme combustible alternatif, mais peut par exemple être traité ultérieurement selon un mode de réalisation préféré de l'invention tel que décrit ci-dessous.

Suivant ce mode de réalisation préféré, le deuxième flux est séparé à l'aide d'un deuxième séparateur par la force centrifuge dans un troisième flux principalement constitué de biomasse et un quatrième flux principalement constitué de matériaux d'emballage en plastique. L'humidité du troisième flux est détectée et, avant d'entrer le deuxième flux dans le deuxième séparateur, l'humidité du deuxième flux est régulée en fonction de l'humidité du troisième flux détectée. Cela permet d'obtenir un troisième flux comprenant minimum 6% de matière sèche et de préférence entre 6% et 14% de matière sèche.

Dans un mode de réalisation spécifique la matière sèche du troisième flux est mesurée et régulée en fonction de la matière sèche du troisième flux mesurée.

Toujours suivant ce mode de réalisation, un maximum de matière organique peut être récupéré afin de tendre le résidu vers un recyclage. L'ajout de liquide permet de liquéfier le solde de matière organique en maintenant un troisième flux constitué de biomasse de haute qualité mais avec un potentiel biogaz plus faible.

Pour augmenter ce potentiel, dans un mode de réalisation spécifique, le quatrième flux est essoré dans un troisième séparateur par la force centrifuge dans un flux liquide et un cinquième flux principalement constitué de matériaux d'emballage en plastique.

L'objectif est d'obtenir un cinquième flux ayant un niveau de matière sèche de plus de 65% afin de se rapprocher de 80%.

Ce troisième séparateur peut être réalisé comme les séparateurs précédents, les paramètres pouvant être réglés en fonction du produit à traiter. Ce troisième séparateur de préférence comprend une grille ayant des trous plus petits que les grilles dans les séparateurs précédents.

Le flux liquide sera préférentiellement utilisé afin d'humidifier un des flux susmentionnés.

Selon l'invention, l'objectif est également atteint avec une installation de séparation centrifuge industrielle des déchets alimentaires emballés, comprenant un séparateur par la force centrifuge des déchets dans un premier flux principalement constitué de biomasse et un second flux principalement constitué de matériaux d'emballage en plastique, comprenant des moyens de détection pour détecter l'humidité du premier flux et comprenant des moyens de réglage afin de réguler celle-ci avant d'entrer les déchets dans le séparateur en fonction de l'humidité du premier flux détectée par les moyens de détection.

Une sonde de matière sèche en ligne peut par exemple être choisie comme moyen de détection alors qu'une vanne de régulation avec débitmètre de régulation fera office de moyen de réglage.

Avec les modes de réalisation de la présente invention, les méthodes peuvent être réalisées d'une manière continue.

La présente invention va maintenant être expliquée d'une façon plus détaillée en décrivant des méthodes et installations préférées selon l'invention. Cette description a uniquement pour but de fournir un exemple illustratif de l'invention et de révéler d'autres avantages et détails des méthodes et installations selon l'invention. Elle ne doit en aucun cas être interprétée comme une limitation du domaine d'utilisation de l'invention ou des droits de brevet demandés dans les revendications.

Dans cette description détaillée, les repères numériques font référence aux dessins annexés, dans lesquels :

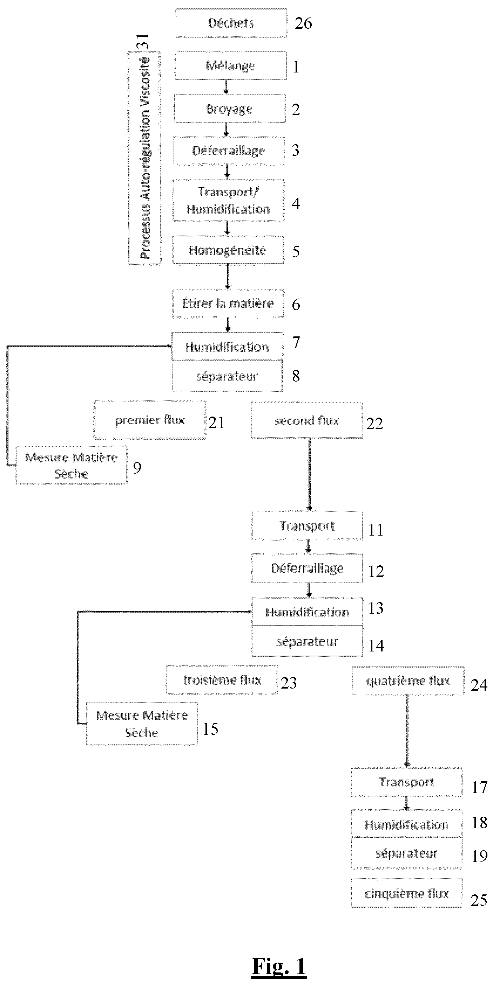

- La figure 1 illustre sous forme de schéma une méthode selon l'invention ;
- La figure 2 illustre sous forme de schéma une installation selon l'invention.

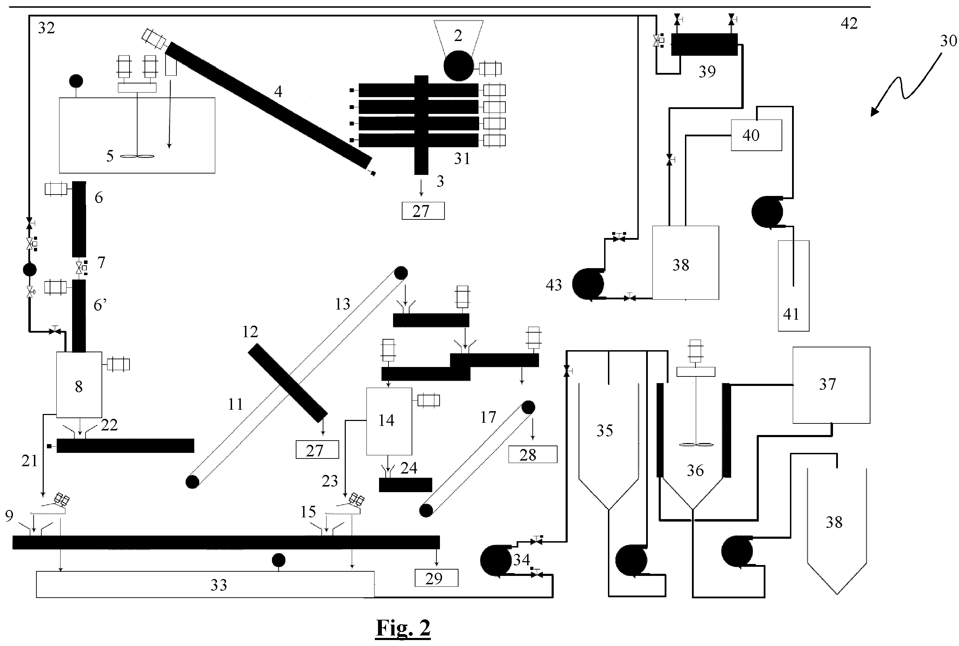

La méthode particulière peut être réalisée dans l'installation (30) illustrée voir Fig 2, qui peut être complétée notamment par un séparateur (19) additionnel.

Dans cette méthode particulière, les déchets (26) sont d'abord préparés lors d'une phase de « préparation ».

Dans cette phase de préparation, les déchets (26) sont une première fois homogénéisés (1) par le conducteur de ligne à l'aide d'un chargeur sur pneus. Cette homogénéisation peut également être réalisée à l'aide de tout équipement de mélange approprié.

Les déchets (26) sont ensuite chargés dans un broyeur (2).

Le broyeur (2) peut avoir des spécifications telles que :
- des roulements en dehors de la zone de broyage ;
- des couteaux linéaires sur le rotor pour avoir une meilleure efficacité du broyage ;
- un poussoir pour permettre de forcer les matières compliquées ;
- une protection du châssis via des plaques en ertalon pour limiter la corrosion par la matière organique ;
- une grille de 150 mm afin de calibrer la matière ;
- une détection automatique de blocage avec cycle automatique de déblocage.

Sortant du broyeur (2), les déchets (26) tombent sur un ensemble de vis (31) qui a pour but d'étaler les déchets (26) et de les transporter proprement vers un déferraillage (3). Là, les matières ferreuses (27) pour recyclage sont enlevées et récoltées.

La matière qui est broyée, déferraillée et calibrée tombe dans des vis de transport (4) vers un mélangeur (5).

La mise en route du broyeur (2) peut être faite selon un programme de gestion suivante.

Lorsque le mélangeur (5) atteint un niveau bas, les vis d'alimentation (4) se mettent en route. Le broyeur (2) et poussoir démarrent pour broyer la matière (26).

Le broyeur (2) préférentiellement ne tourne pas à vide dans un soucis d'efficacité énergétique.

Les vis (4) ont une inclinaison de plus de 20° afin d'obtenir une séparation naturelle de l'excédant de liquide (jus) (32) et viser des déchets (26) ayant la viscosité et la matière sèche désirées. L'excédent de liquide (32) termine dans la base des vis (4) et permet d'humidifier les matières trop sèches. Ce jus (32) est stocké (38), chauffé (39) et filtré (40) afin d'être renvoyé dans le système d'égouts (41), comme décrit plus loin.

Dans le cas contraire, si les déchets (26) sont trop secs, du jus (32) et/ou de l'eau (42) est ajouté dans les vis de transport (4) pour arriver à un flux de déchets (26) équilibré pour une meilleure efficacité de traitement.

Ce processus peut être réalisé à plusieurs reprises. Cela donne un flux de déchets (26) humide et homogène.

Durant le transport, le couple des vis (4) est contrôlé afin d'obtenir des déchets (26) conformes pour le traitement.

Le flux de déchets (26) tombe dans un mélangeur (5) où il est malaxé en continu avant prélèvement vers un ou plusieurs séparateurs (8). Ces séparateurs sont des séparateurs (8) par la force centrifuge.

Dans une première phase, les déchets (26) maintenus en mouvement dans le mélangeur (5) sont captés par une vis (6) immergée avec âme. Cette vis (6) en inox a pour objectif d'emmener les déchets (26) vers une seconde vis (6'). Les deux vis (6, 6') sont dissociées mécaniquement afin d'éviter les transferts de vibration dans le processus.

La seconde vis (6') à comme rôle d'étirer les déchets (26) afin de les doser, celle-ci est directement régulée par le couple de fonctionnement du premier séparateur (8) et de la qualité du premier flux (21).

Si nécessaire, dans cette seconde vis (6'), du jus (32) est ajouté afin de commencer à réguler un peu la viscosité et/ou la matière sèche des déchets (26) à traiter. Typiquement, on ajoute de l'ordre de 1,5 m³/h.

Les déchets (26) entrent dans le premier séparateur (8) qui est en rotation à plus de 1500 tr/min, par exemple 1800 tr/min. Les déchets (26) sont alors projetés sur une grille grâce aux palettes du séparateur (8). A cette fin, le séparateur (8) comprend par exemple minimum 12 couteaux.

Les déchets (26) avancent dans un tunnel du séparateur (8) qui peut être de 1524 mm et 630 mm de diamètre.

La matière organique avec une certaine humidité a la capacité de passer à travers la grille du séparateur (8) d'environ 5 mm. Elle descend ensuite sur un vibrant qui l'étale pour permettre un contrôle de qualité visuel (9) avant de tomber dans un bac de rétention (29).

Les emballages (22) sont emportés au travers du séparateur (8).

La mesure d'humidité (9) est suivie en continu sur le premier flux (21). Cette information et le couple du séparateur (8) régulent la quantité idéale de jus (32) à ajouter durant la phase de préparation pour permettre un fonctionnement optimal.

À cette étape, la matière sèche du premier flux (21) doit se trouver entre 22 % et 26 %.

Le premier flux (21) est alors pompé via un bac de rétention (33). Le niveau régule automatiquement la vitesse des pompes (34). Ce premier flux (21) est stocké (35), passe une chaudière (37) et est stocké (38) pour valorisation.

En fin de première phase, on obtient deux flux (21, 22):
- un premier flux (21) de très haute qualité et de très haute propreté ;
- un deuxième flux (22) étant constitué de résidu d'emballage encore fortement chargé en organique, difficilement valorisable en recyclage ou comme combustible alternatif et dont la matière sèche est comprise entre 40 et 55 %.

Dans une deuxième phase, le deuxième flux (22) est transporté par vis (11) vers une bande transporteuse. Cette étape permet de lisser la matière pour l'étape suivante et de permettre un second déferraillage (12), où les matières ferreuses (27) pour recyclage sont enlevées et récoltées.

Le deuxième flux (22) tombe dans un répartiteur automatique qui est régulé par le séparateur (14) de la deuxième phase.

Le procédé dans la deuxième phase est essentiellement le même que dans ladite première phase, mais l'objectif est de récupérer un maximum de matière organique afin de tendre le résidu vers un recyclage.

L'ajout d'eau (42) ou du jus (32) permet de liquéfier le solde de matière organique en maintenant un troisième flux (23) de haute qualité mais avec un potentiel biogaz plus faible que le premier flux (21).

Le résidu sort du séparateur (14) comme quatrième flux (24) avec un faible pourcentage d'organique mais encore fortement humide.

Dans la deuxième phase, la matière sèche du troisième flux (23) doit se trouver entre 19 % et 22 %. Pour le quatrième flux (24), on a une matière sèche comprise entre 50 et 70 %.

Dans une troisième phase, le résidu contenant un minimum d'organique rentre à nouveau dans un séparateur (19) par la force centrifuge pour être séché.

Cela permet d'augmenter sa valeur calorifique et de rendre ses caractéristiques suffisamment hautes pour envisager un recyclage.

Le liquide (32) après filtration (40) est réutilisé dans tout le processus pour gérer le taux d'humidité desdits flux avant d'entrer dans le séparateur (8, 14, 19) par la force centrifuge correspondant.

Normalement, la gestion des liquides (32) dans une activité comme celle-ci est critique, car ces jus (32) fortement chargés en DCO (demande chimique en oxygène; paramètre qui indique la charge sur le processus du purification) sont une charge pour la gestion en station d'épuration, mais dans une méthode selon l'invention, chaque flux liquide peut trouver un rôle.

L'ensemble des liquides (32) provenant des déchets (26) livrés sont gérés dans un égouttage (41) isolé par rapport au reste du site. Il ne nécessite donc pas de gestion via une station de traitement des eaux potables.

Les liquides sont collectés dans des égouttages (41) et sont repris dans un point bas de l'installation (30).

Une pompe (43) relève les eaux chargées et les renvoie vers un tamisage de 3 à 5mm. La matière de plus que 3 à 5 mm est envoyée directement dans les vis d'alimentation (4, 11) pour traitement. Le jus filtré (40) arrive dans une cuve de 30m³. Cette cuve est munie d'un mélangeur afin d'homogénéiser le liquide.

Une pompe (43) alimente l'ensemble des séparateurs et les points d'injection de jus (32) sur l'installation (30). En option, il y a la possibilité de préchauffer (39) le liquide pour faciliter le déballage dans les séparateurs (8, 14, 19).

Partout où un séparateur (8, 14, 19) est mentionné ci-dessus, il est également possible de prévoir plusieurs de ces séparateurs (8, 14, 19) en parallèle.

En alternative, mais de façon moins préférable, il est également possible de travailler de façon discontinue et de prévoir un seul séparateur (8, 14, 19) avec lequel les différentes phases mentionnées ci-dessus peuvent être réalisées en séquence.

## Revendications

1. Méthode de séparation centrifuge industrielle des déchets (26) alimentaires emballés, à l'aide d'un séparateur (8) par la force centrifuge dans un premier flux (21) principalement constitué de biomasse et un second flux (22) principalement constitué de matériaux d'emballage en plastique, **caractérisé en ce que** l'humidité du premier flux (21) est détectée et régulée en fonction de l'humidité du premier flux (21) détectée, afin d'obtenir un premier flux (21) comprenant entre 20% et 30% de matière sèche.

2. Méthode selon la revendication 1, **caractérisée en ce que** le séparateur (8) est en rotation à plus de 1300 tr/min.

3. Méthode selon la revendication 1 ou 2, **caractérisée en ce que** la matière sèche du deuxième flux (22) est mesurée et **en ce que** l'humidité des déchets est régulée en fonction de la matière sèche du deuxième flux (22) mesurée.

4. Méthode selon l'une des revendications précédentes, **caractérisée en ce que** la méthode comprend une préparation des déchets (26) avant leur entrée dans le séparateur (8) et avant le réglage de l'humidité des déchets (26), cette préparation comprenant consécutivement les étapes suivantes:
a. un premier mélange (1) des déchets ;
b. un broyage (2) des déchets ;
c. un déferraillage (3) des déchets ;
d. un second mélange (5) des déchets.

5. Méthode selon la revendication 4, **caractérisée en ce que** entre les étapes c et d, les déchets (26) sont humidifiés dans une étape e.

6. Méthode selon la revendication 5, **caractérisée en ce que** dans l'étape e, les déchets (26) sont transportés à l'aide des vis de transport (4) dont le couple est contrôlé.

7. Méthode selon la revendication 5 ou 6, **caractérisée en ce que** dans l'étape e, l'humidité des déchets (26) est régulée afin d'obtenir des déchets (26) comprenant entre 35 % et 45 % de matière sèche.

8. Méthode selon l'une des revendications précédentes, **caractérisée en ce que** le deuxième flux (22) est séparé à l'aide d'un deuxième séparateur (14) par la force centrifuge dans un troisième flux (23) principalement constitué de biomasse et un quatrième flux (24) principalement constitué de matériaux d'emballage en plastique et **en ce que** l'humidité du troisième flux (23) est détectée et que, avant d'entrer le deuxième flux (22) dans le deuxième séparateur (14), l'humidité du deuxième flux (22) est régulée en fonction de l'humidité du troisième flux (23) détectée, afin d'obtenir un troisième flux (23) comprenant minimum 6% de matière sèche.

9. Méthode selon la revendication 8, **caractérisée en ce que** la matière sèche du troisième flux (23) est mesurée et **en ce que** l'humidité du troisième flux (23) est régulée en fonction de la matière sèche du troisième flux (23) mesurée.

10. Méthode selon la revendication 8 ou 9, **caractérisée en ce que** le quatrième flux (24) est séché dans un troisième séparateur (19) par la force centrifuge dans un flux liquide et un cinquième flux (25) principalement constitué de matériaux d'emballage en plastique.

11. Méthode selon la revendication 10, **caractérisée en ce que** le flux liquide est utilisé afin d'humidifier un des flux susmentionnés.

12. Une installation de séparation centrifuge (30) industrielle des déchets (26) alimentaires emballés, comprenant un séparateur (8) par la force centrifuge des déchets dans un premier flux (21) principalement constitué de biomasse et un second flux (22) principalement constitué de matériaux d'emballage en plastique, **caractérisé en ce que** l'installation (30) comprend des moyens de détection (9) pour détecter l'humidité du premier flux (21) et des moyens de réglage afin de réguler l'humidité des déchets (26) avant d'entrer les déchets dans le séparateur (8) en fonction de l'humidité du premier flux (21) détectée par les moyens de détection (9).

## Patentansprüche

1. Verfahren zur industriellen zentrifugalen Trennung von verpackten Lebensmittelabfällen (26) mithilfe einer Trenneinrichtung (8) durch die Zentrifugalkraft in einen ersten Strom (21), der hauptsächlich aus Biomasse besteht, und einen zweiten Strom (22), der hauptsächlich aus Verpackungsmaterialien aus Kunststoff besteht, **dadurch gekennzeichnet, dass** die Feuchte des ersten Stroms (21) detektiert wird und in Abhängigkeit von der detektierten Feuchte des ersten Stroms (21) reguliert wird, um einen ersten Strom (21) zu erhalten, der zwischen 20 % und 30 % Trockenmasse umfasst.

2. Verfahren nach Anspruch 1, **dadurch gekennzeichnet, dass** die Trenneinrichtung (8) mit mehr als 1300 U/min dreht.

3. Verfahren nach Anspruch 1 oder 2, **dadurch gekennzeichnet, dass** die Trockenmasse des zweiten Stroms (22) gemessen wird und dass die Feuchte der Abfälle in Abhängigkeit von der gemessenen Trockenmasse des zweiten Stroms (22) reguliert wird.

4. Verfahren nach einem der vorhergehenden Ansprüche, **dadurch gekennzeichnet, dass** das Verfahren eine Vorbereitung der Abfälle (26) vor ihrem Eintritt in die Trenneinrichtung (8) und vor dem Einstellen der Feuchte der Abfälle (26) umfasst, wobei diese Vorbereitung nacheinander die folgenden Schritte umfasst:
a. ein erstes Mischen (1) der Abfälle;
b. ein Zerkleinern (2) der Abfälle;
c. ein Entschrotten (3) der Abfälle;
d. ein zweites Mischen (5) der Abfälle.

5. Verfahren nach Anspruch 4, **dadurch gekennzeichnet, dass** die Abfälle (26) zwischen den Schritten c und d in einem Schritt e befeuchtet werden.

6. Verfahren nach Anspruch 5, **dadurch gekennzeichnet, dass** die Abfälle (26) in dem Schritt e mithilfe der Förderschnecken (4) befördert werden, deren Drehmoment überwacht wird.

7. Verfahren nach Anspruch 5 oder 6, **dadurch gekennzeichnet, dass** die Feuchte der Abfälle (26) in dem Schritt e reguliert wird, um Abfälle (26) zu erhalten, die zwischen 35 % und 45 % Trockenmasse umfassen.

8. Verfahren nach einem der vorhergehenden Ansprüche **dadurch gekennzeichnet, dass** der zweite Strom (22) mithilfe einer zweiten Trenneinrichtung (14) durch die Zentrifugalkraft in einen dritten Strom (23), der hauptsächlich aus Biomasse besteht, und einen vierten Strom (24), der hauptsächlich aus Verpackungsmaterialien aus Kunststoff besteht, getrennt wird, und dass die Feuchte des dritten Stroms (23) detektiert wird und dass die Feuchte des zweiten Stroms (22) vor dem Einführen des zweiten Stroms (22) in die zweite Trenneinrichtung (14) in Abhängigkeit von der detektierten Feuchte des dritten Stroms (23) reguliert wird, um einen dritten Strom (23) zu erhalten, der mindestens 6 % Trockenmasse umfasst.

9. Verfahren nach Anspruch 8, **dadurch gekennzeichnet, dass** die Trockenmasse des dritten Stroms (23) gemessen wird und dass die Feuchte des dritten Stroms (23) in Abhängigkeit von der gemessenen Trockenmasse des dritten Stroms (23) reguliert wird.

10. Verfahren nach Anspruch 8 oder 9, **dadurch gekennzeichnet, dass** der vierte Strom (24) in einer dritten Trenneinrichtung (19) durch die Zentrifugalkraft in einen flüssigen Strom und einen fünften Strom (25), der hauptsächlich aus Verpackungsmaterialien aus Kunststoff besteht, getrennt wird.

11. Verfahren nach Anspruch 10, **dadurch gekennzeichnet, dass** der flüssige Strom dazu verwendet, wird, einen der vorgenannten Ströme zu befeuchten.

12. Anlage zur industriellen zentrifugalen Trennung (30) von verpackten Lebensmittelabfällen (26), umfassend eine Trenneinrichtung (8) zur zentrifugalen Trennung der Abfälle in einen ersten Strom (21), der hauptsächlich aus Biomasse besteht, und einen zweiten Strom (22), der hauptsächlich aus Verpackungsmaterialien aus Kunststoff besteht, **dadurch gekennzeichnet, dass** die Anlage (30) Detektionsmittel (9) umfasst, um die Feuchte des ersten Stroms (21) zu detektieren, und Regelungsmittel, um die Feuchte der Abfälle (26) vor dem Eintreten der Abfälle in die Trenneinrichtung (8) in Abhängigkeit von der von den Detektionsmitteln (9) detektierten Feuchte des ersten Stroms (21) zu regulieren.

## Claims

1. Method for industrial centrifugal separation of packaged food waste (26), using a centrifugal separator (8), into a first stream (21) mainly constituted of biomass and a second stream (22) mainly constituted of plastic packaging materials, **characterized in that** the moisture content of the first stream (21) is detected and regulated as a function of the detected moisture content of the first stream (21), in order to obtain a first stream (21) comprising a solids content of between 20% and 30%.

2. Method according to Claim 1, **characterized in that** the separator (8) rotates at more than 1300 rpm.

3. Method according to Claim 1 or 2, **characterized in that** the solids content of the second stream (22) is measured and **in that** the moisture content of the waste is regulated as a function of the measured solids content of the second stream (22).

4. Method according to one of the preceding claims, **characterized in that** the method comprises preparation of the waste (26) before the entry thereof into the separator (8) and before the adjustment of the moisture content of the waste (26), this preparation consecutively comprising the following steps:
a. first mixing (1) of the waste;
b. grinding (2) of the waste;
c. removal of iron (3) from the waste;
d. second mixing (5) of the waste.

5. Method according to Claim 4, **characterized in that**, between steps c and d, moisture is added to the waste (26) in a step e.

6. Method according to Claim 5, **characterized in that**, in step e, the waste (26) is transported using transport screws (4) of which the torque is controlled.

7. Method according to Claim 5 or 6, **characterized in that**, in step e, the moisture content of the waste (26) is regulated in order to obtain waste (26) comprising a solids content of between 35% and 45%.

8. Method according to one of the preceding claims, **characterized in that** the second stream (22) is separated using a second centrifugal separator (14) into a third stream (23) mainly constituted of biomass and a fourth stream (24) mainly constituted of plastic packaging materials, and **in that** the moisture content of the third stream (23) is detected and **in that**, before the second stream (22) enters the second separator (14), the moisture content of the second stream (22) is regulated as a function of the detected moisture content of the third stream (23), in order to obtain a third stream (23) comprising a solids content of at least 6%.

9. Method according to Claim 8, **characterized in that** the solids content of the third stream (23) is measured and **in that** the moisture content of the third stream (23) is regulated as a function of the measured solids content of the third stream (23).

10. Method according to Claim 8 or 9, **characterized in that** the fourth stream (24) is dried in a third centrifugal separator (19) into a liquid stream and a fifth stream (25) mainly constituted of plastic packaging materials.

11. Method according to Claim 10, **characterized in that** the liquid stream is used in order to add moisture to one of the streams mentioned above.

12. Installation for industrial centrifugal separation (30) of packaged food waste (26), comprising a centrifugal separator (8) of the waste into a first stream (21) mainly constituted of biomass and a second stream (22) mainly constituted of plastic packaging materials, **characterized in that** the installation (30) comprises detection means (9) for detecting the moisture content of the first stream (21) and adjustment means in order to regulate the moisture content of the waste (26) before the waste enters the separator (8) as a function of the moisture content of the first stream (21) that is detected by the detection means (9).
